# EUROPÄISCHE PATENTSCHRIFT

(11) **EP 0 839 630 B1**
(45) Veröffentlichungstag und Bekanntmachung des Hinweises auf die Patenterteilung: **05.12.2001**
(21) Anmeldenummer: 97116588.1
(22) Anmeldetag: 24.09.1997
(51) Int. Cl.: B29C 47/00, B29C 47/52, B29C 47/10

(54) **Zahnradextruder**
Gear-pump extruder
Extrudeuse à pompe à engrenages

(30) Priorität: 27.09.1996 DE 19639735
(43) Veröffentlichungstag der Anmeldung: 06.05.1998
(73) Patentinhaber: Uth GmbH, 36041 Fulda (DE)
(72) Erfinder: Uth, Peter Joachim, 36041 Fulda (DE); Menz, Thomas, 36124 Eichenzell (DE)
(74) Vertreter: Schlagwein, Udo, Dipl.-Ing.

(56) Entgegenhaltungen:
- EP-A- 0 062 017
- EP-A- 0 165 218
- EP-A- 0 341 033
- GB-A- 117 097

## Beschreibung

Die Erfindung betrifft einen Extruder zum Plastifizieren und Extrudieren einer in Form zumindest eines kalten Materialstreifens zugeführten Kautschukmischung, welcher nach Art einer Zahnradpumpe zwei in einem Gehäuse angeordnete, miteinander kämmende Zahnräder, zumindest einen Einlasskanal an der Einlaufseite für den Materialstreifen und einen Auslass in der Mantelfläche des Gehäuses hat, wobei die Drehrichtung der Zahnräder so ist, dass der Materialstreifen zwischen einem Zahnrad und dem Gehäuse zu dem Auslass gefördert wird.

Ein solcher Extruder ist Gegenstand der DE 345 406. Im Gegensatz zu Schneckenextrudern fanden nach dem Prinzip der Zahnradpumpe arbeitende Extruder in der Praxis keine Anwendung, obgleich die üblicherweise zum Extrudieren von kalten Kautschukmischungen verwendeten Schneckenextruder sehr großvolumig bauen, teuer in der Anschaffung sind und einen unerwünscht hohen Energiebedarf haben.

Bei dem Extruder nach der genannten DE 345 406 wird über eine durch zwei Walzen gebildete Einzugsvorrichtung ein einziger Materialstreifen zugeführt, welcher im Gehäuse des Extruders in zwei Streifen aufgeteilt und dann jeweils außenseitig eines Zahnrades zum Auslass gefördert wird. Für dieses Aufteilen in zwei Materialstreifen ist relativ viel Energie erforderlich, was im Extruder im Bereich der diese Aufteilung herbeiführenden Schneide zu einer unzulässig hohen Materialerwärmung führen kann. Weiterhin ist es bei dem bekannten Extruder nachteilig, dass die Geometrie des Einlasses nur für ein bestimmtes Material optimal ist. In der Praxis verarbeiten unterschiedliche Hersteller von extrudierten Gummiartikeln jedoch unterschiedliche Materialien, welche unterschiedlich gestaltete Extruder erfordern. Es hat sich gezeigt, dass die für ein bestimmtes Material optimale Geometrie eines Extruders nicht zuverlässig vorherbestimmt werden kann, so dass es wünschenswert wäre, wenn der Benutzer des Extruders ihn möglichst weitgehend den Bedingungen seines Materials anpassen könnte.

Der Erfindung liegt das Problem zugrunde, einen Extruder der eingangs genannten Art so zu gestalten, dass er mit möglichst geringem Aufwand möglichst weitgehend hinsichtlich seiner Geometrie unterschiedlichen, zu verarbeitenden Materialien angepasst werden kann.

Dieses Problem wird erfindungsgemäß dadurch gelöst, dass der Einlasskanal in einem lösbar im Gehäuse des Extruders gehaltenen Einsatz vorgesehen ist.

Bei einem solchen Extruder kann man für unterschiedliche Materialien unterschiedliche Einsätze vorsehen, welche sich durch die Geometrie des Einlasskanals voneinander unterscheiden. Dadurch hat man die Möglichkeit, entweder von vornherein aufgrund Erfahrung den für das jeweils verwendete, zu extrudierende Material am besten geeigneten Einsatz zu verwenden oder aber durch Benutzen des Extruders mit unterschiedlichen Einsätzen auszuprobieren, welcher am besten geeignet ist. Da es sich bei den Einsätzen um relativ kleine und kostengünstig zu erstellende Bauteile handelt, ist es auch möglich, Einsätze ohne Einlasskanal zu liefern und es dem Benutzer des Extruders selbst zu überlassen, in diese jeweils einen Einlasskanal nach eigenen Erfahrungen einzuarbeiten.

Das Material wird im Extruder mit besonders geringen Reibungsverlusten gefördert, wenn der Einsatz aus einem Kunststoff mit für den zuzuführenden Materialstreifen guten Gleiteigenschaften besteht. Zusätzlich bieten solche Einsätze aus Kunststoff den Vorteil, dass sie kostengünstig herstellbar und ihr Einlasskanal mit geringem Aufwand nachzubearbeiten ist, um eine weitere Optimierung zu erreichen.

Als besonders vorteilhaft hat sich als Werkstoff für den Einsatz Polytetra-Fluorethylen erwiesen.

Konstruktiv besonders vorteilhaft ist der Extruder gestaltet, wenn das Gehäuse an seiner Einlaufseite zumindest eine wenigstens in etwa kreisförmige Ausnehmung hat, von der eine im Querschnitt rechteckige Durchbrechung zu einem Zahnrad führt, und wenn der Einsatz entsprechend geformt in dieser Ausnehmung und Durchbrechung sitzt.

Die Befestigung des Einsatzes kann sehr einfach dadurch erfolgen, dass der Einsatz durch einen mit dem Gehäuse verschraubten, über den Einsatz reichenden Halterahmen in der Ausnehmung und Durchbrechung gehalten ist.

Wenn der Extruder zwei Einlasskanäle aufweisen soll, dann kann man hierfür einen Einsatz mit zwei Einlasskanälen vorsehen. Vorteilhafter ist es jedoch, wenn gemäß einer Weiterbildung der Erfindung an der Einlaufseite zwei kreisförmige Ausnehmungen mit jeweils einer Durchbrechung vorgesehen sind, wobei die Ausnehmungen sich in Höhe des Eingriffsbereichs der Zahnräder überschneiden, und wenn entsprechend in den Ausnehmungen spiegelbildlich zueinander zwei jeweils an den einander zugewandten Seiten mit einer Abflachung versehene Einsätze vorgesehen sind.

Die Füllung der Zahnlücken der Zahnräder ist besonders gut, wenn der Einlasskanal jeweils zu einer in Laufrichtung des Zahnrades sich keilförmig zum Zahnrad hin verjüngenden Tasche führt. Hierdurch wird das Material beim Füllen der Zahnlücken komprimiert, wodurch Lufteinschlüsse vermieden werden.

Die in den Zahnlücken vorhandene Luft wird axial nach außen gefördert, so dass es nicht zu Lufteinschlüssen kommt, wenn gemäß einer anderen vorteilhaften Weiterbildung der Erfindung die dem Zahnrad gegenüberliegende Wandfläche der Tasche über die Breite des Zahnrades gesehen ballig ausgebildet ist und in Zahnradmitte geringeren Abstand vom Zahnrad hat als in den Seitenbereichen. Die Ausführungsform mit den Taschen im Gehäuse ist auch unabhängig von Einsätzen im Einlass bei Extrudern vorteilhaft.

Das gilt auch für eine weitere Ausführungsform, gemäß der die beiden Einlasskanäle mit gegenseitigem Abstand beginnen und vor dem Extruder zwischen den Einlasskanälen eine die Materialstreifen zum Extruder hin drückende Einschubvorrichtung angeordnet ist. Hierdurch wird der Materialstreifen beim Einführen geringfügig in Axialrichtung zusammengedrückt, wodurch sich ebenfalls die Füllung des Extruders verbessert.

Der Antrieb und die Steuerung der Einschubvorrichtung sind besonders einfach ausgebildet, wenn die Einschubvorrichtung mit geringfügig höherer Fördergeschwindigkeit angetrieben ist als der Extruder und wenn zum Ausgleich der unterschiedlichen Fördergeschwindigkeiten eine Rutschkupplung vorgesehen ist. Eine solche Einschubvorrichtung kann auf einfache Weise vom Motor des Extruders mitangetrieben werden.

Die Rutschkupplung arbeitet verschleißfrei, wenn sie eine mit einem Magnetfeld arbeitende Hysteresekupplung ist.

Falls besonders hohe Anforderungen an die Qualität des extrudierten Produktes bestehen, kann man vorsehen, dass die Einlasskanäle mit einer Unterdruckquelle Verbindung haben und eine Schleuse zum Zuführen des jeweiligen Materialstreifens vorgesehen ist. Hierdurch wird verhindert, dass es im Extruder zu Lufteinschlüssen kommen kann.

Die Schleuse ist äußerst kostengünstig herstellbar, wenn sie gemäß einer anderen Weiterbildung der Erfindung durch einen elastischen, zum Durchführen des Materialstreifens bemessenen Schlauch gebildet ist.

Wenn man einen Extruder evakuieren will, dann besteht die Gefahr, dass das in ihm vorhandene, fließfähige Material von der Unterdruckquelle angesaugt wird und dadurch der Vakuumanschluss verstopft. Das kann mit geringem Aufwand verhindert werden, wenn nur ein Einlasskanal zum Zuführen eines Materialstreifens vorgesehen ist und an dem Zahnrad, zu dem kein Einlasskanal führt, einlaufseitig ein Unterdruckanschluss vorgesehen ist.

Auch das Evakuieren der Einlassseite ist unabhängig von der übrigen Ausgestaltung des Extruders vorteilhaft. Das gilt uneingeschränkt auch für eine Ausführungsform, gemäß der im Extrudergehäuse eine Extruderdüse gegen die Kraft einer Feder axial verschieblich gehalten ist. Durch diese Verschiebbarkeit der Extruderdüse kann diese sich bei Volumenschwankungen verschieben. Dadurch werden durch die Zahngeometrie und/oder unterschiedliche Füllungen der Zahnlücken erzeugte Pulsationen kompensiert, was zu einer deutlichen Anhebung der Qualität des Extrudats führt.

Die Feder ist den herrschenden, hohen Drücken optimal angepasst, wenn sie durch zumindest eine gegen eine auslassseitige Schulter des Gehäuses anliegende Tellerfeder gebildet ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig.1: einen Querschnitt durch einen Extruder nach der Erfindung,
- Fig.2: einen Blick auf die Einlassseite des Extruders ohne eingesetzte Einsätze,
- Fig.3: einen Längsschnitt durch einen Teilbereich des Extruders,
- Fig.4: einen Extruder mit einer erfindungsgemäßen Einschubvorrichtung,
- Fig.5: einen Extruder mit einer erfindungsgemäßen Schleuse am Einlass,
- Fig.6: einen Querschnitt durch eine weitere Ausführungsform eines erfindungsgemäßen Extruders.

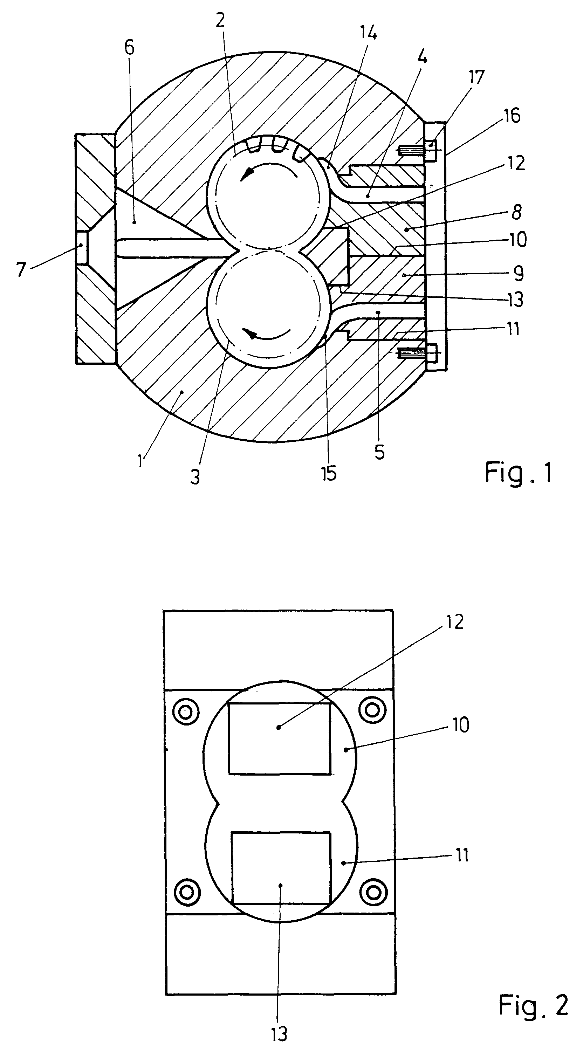

Die Figur 1 zeigt ein Gehäuse 1, in welchem zwei Zahnräder 2, 3 drehbar gelagert sind. Diese sind so antreibbar, dass sie sich, wie durch zwei Pfeile gekennzeichnet, entgegengesetzt zu drehen vermögen. Von der rechten Seite her führen zwei Einlasskanäle 4, 5 zu den Zahnrädern 2, 3 hin. Das über diese Einlasskanäle zugeführte Material verlässt den Extruder über einen Auslass 6 und eine dort vorgesehene Extrusionsdüse 7.

Wichtig für die Erfindung ist, dass jeder Einlasskanal 4, 5 in einem Einsatz 8, 9 aus Kunststoff, vorzugsweise Polytetrafluorethylen, vorgesehen ist. Diese Einsätze 8, 9 sitzen jeweils in einer Ausnehmung 10, 11 und ragen in eine von dort bis zu den Zahnrädern 2, 3 führende, im Querschnitt rechteckige Durchbrechung 12, 13. Die Einlasskanäle 4, 5 münden mit einem Teilbereich jeweils in eine Tasche 14, 15 der Innenmantelfläche des Gehäuses 1. Diese Taschen 14, 15 verlaufen in Drehrichtung der Zahnräder 2, 3 keilförmig. Die Einsätze 8, 9 werden durch einen mittels Schrauben 17 am Gehäuse 1 befestigten Rahmen 16 in den Ausnehmungen 10, 11 gehalten.

Die Figur 2 lässt erkennen, dass die Ausnehmungen 10, 11 im Querschnitt kreisförmig sind, sich jedoch geringfügig überlappen. Ebenfalls zu erkennen sind in Figur 2 die rechteckigen Durchbrechungen 12, 13.

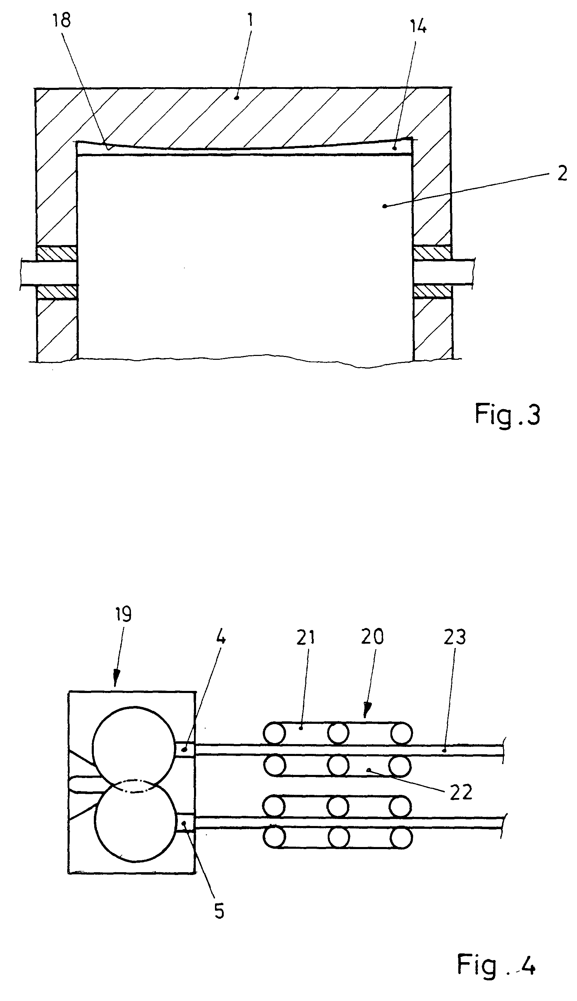

Die Figur 3 zeigt im Querschnitt die Tasche 14 zwischen dem Zahnrad 2 und dem Gehäuse 1. Zu erkennen ist, dass die Tasche 14 eine Wandfläche 18 hat, die ballig ausgebildet ist und an den beiden Seiten mehr Abstand vom Zahnrad 2 hat als im mittleren Bereich.

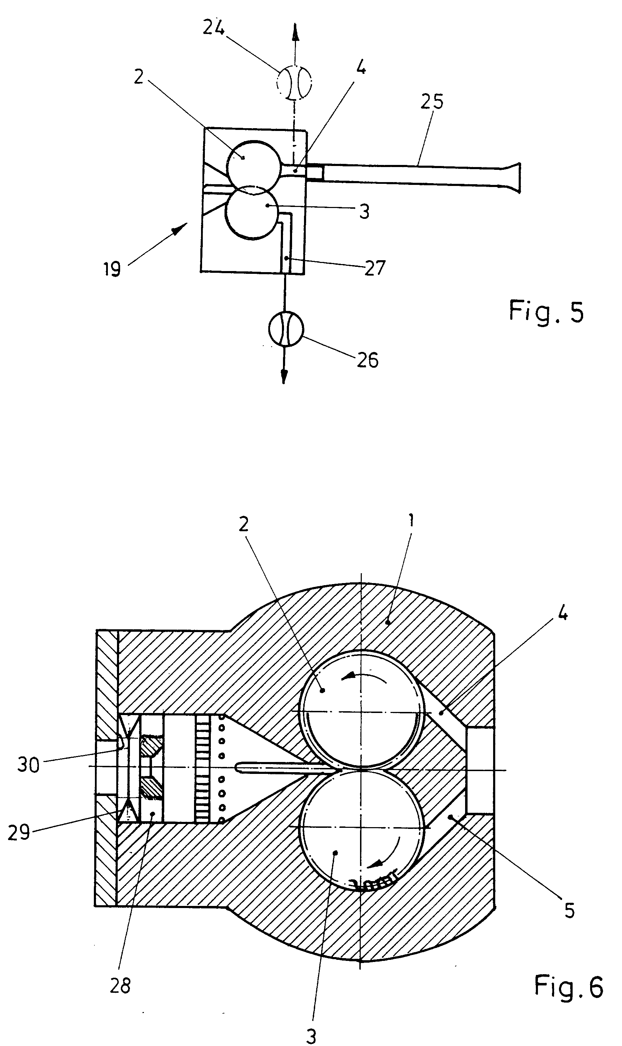

Die Figur 4 zeigt einen Extruder 19, welcher dem Extruder nach Figur 1 entspricht. Einlassseitig ist dem Extruder 19 eine Einschubvorrichtung 20 vorgeschaltet. Diese besteht jeweils aus zwei mal zwei Förderbändern 21, 22, zwischen denen jeweils ein dem Extruder 19 zuzuführender Materialstreifen 23 eingeklemmt ist. Die Paare von Förderbändern 21, 22 sind so angetrieben, dass die Materialstreifen 23 in den Extruder 19 hineingedrückt werden. Hierzu können sie vom Motor des Extruders 19 mit geringfügig höherer Drehzahl angetrieben sein als der Extruder 19, benötigen dann aber eine Rutschkupplung, welche durch eine magnetische Hysteresekupplung gebildet sein kann.

In der Figur 5 ist strichpunktiert eine Unterdruckquelle 24 dargestellt, welche mit dem Einlasskanal 4 Verbindung hat. Am Einlasskanal 4 ist eine Schleuse 25 befestigt, welche durch einen elastischen Schlauch gebildet und an seinem freien Ende durch ein nicht gezeigtes, rahmenartiges Bauteil offengehalten ist und durch den hindurch der in Figur 4 gezeigte Materialstreifen 23 eingeführt wird. Der Unterdruck im Einlasskanal 4 bewirkt dann, dass sich der Schlauch dichtend gegen den Materialstreifen 23 anlegt, so dass keine Luft angesaugt wird.

In durchgezogenen Linien ist in Figur 5 eine Unterdruckquelle 26 dargestellt, welche über einen Unterdruckanschluss 27 nur mit dem Zahnrad 3 Verbindung hat. Durch die Drehung des Zahnrades 3 entsteht auslassseitig Unterdruck, so dass es zu einem Absaugen eventueller Lufteinschlüsse im Material kommt. Falls die Unterdruckquelle 26 anstelle der Unterdruckquelle 24 vorgesehen ist, hat der Extruder 19 nur einen Einlasskanal und ist deshalb nur zum Zuführen eines Materialstreifens ausgebildet.

Bei der Ausführungsform nach Figur 6 stützt sich eine Extruderdüse 28 über eine durch Tellerfedern gebildete Druckfeder 29 gegen eine auslassseitige Schulter 30 ab. Dadurch kann sich die Extruderdüse 28 bei Volumenschwankungen geringfügig axial, also in Figur 6 gesehen nach links oder rechts, verschieben und auf diese Weise Pulsationen ausgleichen.

### Bezugszeichenliste

- 1: Gehäuse
- 2: Zahnrad
- 3: Zahnrad
- 4: Einlasskanal
- 5: Einlasskanal

- 6: Auslass
- 7: Extrusionsdüse
- 8: Einsatz
- 9: Einsatz
- 10: Ausnehmung

- 11: Ausnehmung
- 12: Durchbrechung
- 13: Durchbrechung
- 14: Tasche
- 15: Tasche

- 16: Rahmen
- 17: Schraube
- 18: Wandfläche
- 19: Extruder
- 20: Einschubvorrichtung

- 21: Förderband
- 22: Förderband
- 23: Materialstreifen
- 24: Unterdruckquelle
- 25: Schleuse

- 26: Unterdruckquelle
- 27: Unterdruckanschluss
- 28: Extruderdüse
- 29: Druckfeder
- 30: Schulter

## Patentansprüche

1. Extruder zum Plastifizieren und Extrudieren einer in Form zumindest eines kalten Materialstreifens zugeführten Kautschukmischung, welcher nach Art einer Zahnradpumpe zwei in einem Gehäuse (1) angeordnete, miteinander kämmende Zahnräder (2, 3), zumindest einen Einlasskanal (4, 5) an der Einlaufseite für den Materialstreifen und einen Auslass (6) in der Mantelfläche des Gehäuses hat, wobei die Drehrichtung der Zahnräder so ist, dass der Materialstreifen zwischen einem Zahnrad und dem Gehäuse zu dem Auslass gefördert wird, **dadurch gekennzeichnet, dass** der Einlasskanal (4, 5) in einem lösbar im Gehäuse (1) des Extruders gehaltenen Einsatz (8, 9) vorgesehen ist.

2. Extruder nach Anspruch 1, **dadurch gekennzeichnet, dass** der Einsatz (8, 9) aus einem Kunststoff mit für den zuzuführenden Materialstreifen guten Gleiteigenschaften besteht.

3. Extruder nach Anspruch 2, **dadurch gekennzeichnet, dass** der Einsatz (8, 9) aus Polytetra-Fluorethylen besteht.

4. Extruder nach zumindest einem der vorangehenden Ansprüche, **dadurch gekennzeichnet, dass** das Gehäuse (1) an seiner Einlaufseite zumindest eine wenigstens in etwa kreisförmige Ausnehmung (10, 11) hat, von der eine im Querschnitt rechteckige Durchbrechung (12, 13) zu einem Zahnrad (2, 3) führt, und dass der Einsatz (8, 9) entsprechend geformt in dieser Ausnehmung (10, 11) und Durchbrechung (12, 13) sitzt.

5. Extruder nach zumindest einem der vorangehenden Ansprüche, **dadurch gekennzeichnet, dass** der Einsatz (8, 9) durch einen mit dem Gehäuse (1) verschraubten, über den Einsatz (8, 9) reichenden Rahmen (16) in der Ausnehmung (10, 11) und Durchbrechung (12, 13) gehalten ist.

6. Extruder nach zumindest einem der vorangehenden Ansprüche, **dadurch gekennzeichnet, dass** an der Einlaufseite zwei kreisförmige Ausnehmungen (10, 11) mit jeweils einer Durchbrechung (12, 13) vorgesehen sind, wobei die Ausnehmungen (10, 11) sich in Höhe des Eingriffsbereichs der Zahnräder (2, 3) überschneiden, und dass entsprechend in den Ausnehmungen (10, 11) spiegelbildlich zueinander zwei jeweils an den einander zugewandten Seiten mit einer Abflachung versehene Einsätze (8, 9) vorgesehen sind.

7. Extruder nach zumindest einem der vorangehenden Ansprüche, **dadurch gekennzeichnet, dass** der Einlasskanal (4, 5) jeweils zu einer in Laufrichtung des Zahnrades (2, 3) sich keilförmig zum Zahnrad (2, 3) hin verjüngenden Tasche (14, 15) führt.

8. Extruder nach Anspruch 7, **dadurch gekennzeichnet, dass** die dem Zahnrad (2, 3) gegenüberliegende Wandfläche (18) der Tasche (14, 15) über die Breite des Zahnrades (2, 3) gesehen ballig ausgebildet ist und in Zahnradmitte geringeren Abstand vom Zahnrad (2, 3) hat als in den Seitenbereichen.

9. Extruder nach zumindest einem der vorangehenden Ansprüche, **dadurch gekennzeichnet, dass** die beiden Einlasskanäle (4, 5) mit gegenseitigem Abstand beginnen und vor dem Extruder (19) zwischen den Einlasskanälen (4, 5) eine die Materialstreifen (23) zum Extruder (19) hin drückende Einschubvorrichtung (20) angeordnet ist.

10. Extruder nach Anspruch 9, **dadurch gekennzeichnet, dass** die Einschubvorrichtung (20) mit geringfügig höherer Fördergeschwindigkeit angetrieben ist als der Extruder (19) und dass zum Ausgleich der unterschiedlichen Fördergeschwindigkeiten eine Rutschkupplung vorgesehen ist.

11. Extruder nach Anspruch 10, **dadurch gekennzeichnet, dass** die Rutschkupplung eine mit einem Magnetfeld arbeitende Hysteresekupplung ist.

12. Extruder nach zumindest einem der vorangehenden Ansprüche, **dadurch gekennzeichnet, dass** die Einlasskanäle (4) mit einer Unterdruckquelle (24) Verbindung haben und eine Schleuse (25) zum Zuführen des jeweiligen Materialstreifens (23) vorgesehen ist.

13. Extruder nach zumindest einem der vorangehenden Ansprüche, **dadurch gekennzeichnet, dass** die Schleuse (25) durch einen elastischen, zum Durchführen des Materialstreifens (23) bemessenen Schlauch gebildet ist.

14. Extruder nach zumindest einem der vorangehenden Ansprüche, **dadurch gekennzeichnet, dass** nur ein Einlasskanal (4) zum Zuführen eines Materialstreifens (23) vorgesehen ist und an dem Zahnrad (3), zu dem kein Einlasskanal führt, einlaufseitig ein Unterdruckanschluss (27) vorgesehen ist.

15. Extruder nach zumindest einem der vorangehenden Ansprüche, **dadurch gekennzeichnet, dass** in seinem Gehäuse (1) eine Extruderdüse (28) gegen die Kraft einer Druckfeder (29) axial verschieblich gehalten ist.

16. Extruder nach Anspruch 15, **dadurch gekennzeichnet, dass** die Druckfeder (29) durch zumindest eine gegen eine auslassseitige Schulter (30) des Gehäuses (1) anliegende Tellerfeder gebildet ist.

## Claims

1. Extruder for plasticizing and extruding a rubber compound supplied in the form of at least one cold material strip, the said extruder having, in the manner of a gear pump, two toothed wheels (2, 3) arranged in a casing (1) and meshing with each other, at least one inlet passageway (4, 5) on the entry side for the material strip and an outlet (6) in the shell of the casing, the direction of rotation of the toothed wheels being such that the material strip is conveyed between a toothed wheel and the casing to the outlet, **characterized in that** the inlet passageway (4, 5) is provided in an insert (8, 9) detachably held in the casing (1) of the extruder.

2. Extruder according to Claim 1, **characterized in that** the insert (8, 9) consists of a plastic material with good sliding properties for the material strip to be fed.

3. Extruder according to Claim 2, **characterized in that** the insert (8, 9) consists of polytetrafluoroethylene.

4. Extruder according to at least one of the preceding claims, **characterized in that** the casing (1) has on its entry side at least one at least approximately circular recess (10, 11) from which an opening (12, 13) of rectangular cross-section leads to a toothed wheel (2, 3), and **in that** the correspondingly shaped insert (8, 9) seats in this recess (10, 11) and opening (12, 13).

5. Extruder according to at least one of the preceding claims, **characterized in that** the insert (8, 9) is held in the recess (10, 11) and opening (12, 13) by a frame (16) reaching across the insert (8, 9) and screwed to the casing (1).

6. Extruder according to at least one of the preceding claims, **characterized in that** two circular recesses (10, 11) each with an opening (12, 13) are provided on the entry side, the recesses (10, 11) overlapping in the plane of the engagement zone of the toothed wheels (2, 3), and **in that**, accordingly, two inserts (8, 9), each provided with a flat face on the side facing the other insert, are provided, mirror-inverted, in the recesses (10, 11).

7. Extruder according to at least one of the preceding claims, **characterized in that** each inlet passageway (4, 5) leads to a pocket (14, 15) in the form of a wedge narrowing towards the toothed wheel (2, 3) in the running direction of the toothed wheel (2, 3).

8. Extruder according to Claim 7, **characterized in that** the wall surface (18) of the pocket (14, 15) opposite the toothed wheel (2, 3) is crowned when viewed across the width of the toothed wheel (2, 3), and has less clearance from the toothed wheel (2, 3) at the centre of the toothed wheel than in the lateral regions.

9. Extruder according to at least one of the preceding claims, **characterized in that** the two inlet passageways (4, 5) are initially spaced apart, and a feeder device (20) pushing the material strips (23) to the extruder (19) is arranged upstream of the extruder (19) and between the inlet passageways (4, 5).

10. Extruder according to Claim 9, **characterized in that** the feeder device (20) is driven at a slightly higher conveying speed than the extruder (19), and **in that** a slipping clutch is provided to compensate for the unequal conveying speeds.

11. Extruder according to Claim 10, **characterized in that** the slipping clutch is a hysteresis clutch working with a magnetic field.

12. Extruder according to at least one of the preceding claims, **characterized in that** the inlet passageways (4) have a connection to a partial vacuum source (24), and a transfer tube (25) is provided for feeding each material strip (23).

13. Extruder according to at least one of the preceding claims, **characterized in that** the transfer tube (25) is formed by an elastic hose of dimensions suitable for feeding the material strip (23).

14. Extruder according to at least one of the preceding claims, **characterized in that** only one inlet passageway (4) for feeding a material strip (23) is provided, and a partial-vacuum connection (27) is provided, on the entry side, to the toothed wheel (3) not served by an inlet passageway.

15. Extruder according to at least one of the preceding claims, **characterized in that** an extrusion die (28) is held axially displaceably against the force of a compression spring (29) within the casing (1) of the extruder.

16. Extruder according to Claim 15, **characterized in that** the compression spring (29) is formed by at least one cup spring that bears against a shoulder (30) on the outlet side of the casing (1).

## Revendications

1. Extrudeuse pour la plastification et l'extrusion d'un mélange de caoutchouc, acheminé sous la forme d'au moins une bande de matière froide, qui possède, à la façon d'une pompe à engrenage, deux roues dentées (2, 3) disposées dans un corps (1), qui engrènent l'une avec l'autre, au moins un conduit d'admission (4, 5) sur le côté d'entrée pour la bande de matière et une sortie (6) ménagée dans la surface de paroi du corps, le sens de rotation des roues dentées étant tel que la bande de matière soit transportée vers la sortie entre une roue dentée et le corps, **caractérisée en ce que** le conduit d'admission (4, 5) est prévu dans un élément rapporté (8, 9) qui est monté de façon démontable dans le corps (1) de l'extrudeuse.

2. Extrudeuse selon la revendication 1, **caractérisée en ce que** l'élément rapporté (8, 9) est fait d'une matière plastique possédant de bonne propriétés de glissement pour la bande de matière à acheminer.

3. Extrudeuse selon la revendication 2, **caractérisée en ce que** l'élément rapporté (8, 9) est fait de polytétrafluoréthylène.

4. Extrudeuse selon au moins un des revendications précédentes, **caractérisée en ce que** le corps (1) présente, sur son côté d'entrée, au moins un évidement (10, 11) de forme au moins à peu près circulaire, d'où une ouverture (12) rectangulaire en section transversale mène à une roue dentée (2, 3) et **en ce que** l'élément rapporté (8, 9), convenablement conformé, est logé dans cet évidement (10, 11) et dans cette ouverture (12, 13).

5. Extrudeuse selon au moins une des revendications précédentes, **caractérisée en ce que** l'élément rapporté (8, 9) est tenu dans l'évidement (10, 11) et dans l'ouverture (12, 13) par un cadre (16) vissé au corps (1), qui déborde au-delà de l'élément rapporté (8, 9).

6. Extrudeuse selon une des revendications précédentes, **caractérisée en ce que**, sur le côté d'entrée sont prévus deux évidements circulaires (10, 11) présentant chacun une ouverture (12, 13), les évidements (10, 11) se recoupant à la hauteur de la région d'engrènement des roues dentées (2, 3), et **en ce que**, d'une façon qui correspond aux évidements (10, 11), sont prévus, symétriquement l'un de l'autre, deux éléments rapportés (8, 9) dont chacun est muni d'un méplat sur le côté dirigé vers l'autre.

7. Extrudeuse selon au moins une des revendications précédentes, **caractérisée en ce que** le conduit d'admission (4, 5) mène dans chaque cas à une poche (14,15) qui se rétrécit en coin jusqu'à la roue dentée (2, 3), dans le sens de la marche de la roue dentée (2, 3).

8. Extrudeuse selon la revendication 7, **caractérisée en ce que** la surface de paroi (18) de la poche (14, 15) qui fait face à la roue dentée (2,3) est de forme bombée, vue sur la largeur de la roue dentée (2, 3) et se trouve à une plus petite distance de la roue dentée (2, 3) au milieu de la roue dentée que dans les régions latérales.

9. Extrudeuse selon au moins une des revendications précédentes, **caractérisée en ce que** les deux conduits d'admission (4, 5) commencent avec un écartement mutuel et un dispositif d'engagement (20) qui comprime la bande de matière (23) en direction de l'extrudeuse est disposé en avant de l'extrudeuse (19), entre les conduits d'admission (4, 5)

10. Extrudeuse selon la revendication 9, **caractérisée en ce que** le dispositif d'engagement (20) est entraîné avec une vitesse de transport légèrement supérieure à celle de l'extrudeuse (19) et **en ce qu'**un accouplement à glissement est prévu pour compenser les vitesses de transport différentes.

11. Extrudeuse selon la revendication 10, **caractérisée en ce que** l'accouplement à glissement est un accouplement à hystérésis travaillant avec un champ magnétique.

12. Extrudeuse selon au moins une des revendications précédentes, **caractérisée en ce que** les conduits d'admission (4) sont reliés à une source de dépression (24) et il est prévu un sas (25) pour l'acheminement de la bande de matière (23) correspondante.

13. Extrudeuse selon au moins une des revendications précédentes, **caractérisée en ce que** le sas (25) est constitué par un tuyau élastique, d'une dimension étudiée pour le passage de la bande de matière (23).

14. Extrudeuse selon au moins une des revendications précédentes, **caractérisée en ce qu'**il n'est prévu qu'un seul conduit d'admission (4) pour l'acheminement d'une bande de matière (23) et **en ce qu'**un raccord de dépression (27) est prévu sur le côté d'entrée au droit de la roue dentée (3) à laquelle aucun conduit d'admission ne mène.

15. Extrudeuse selon au moins une des revendications précédentes, **caractérisée en ce qu'**une filière d'extrudeuse (28) est fixée dans son corps (1) mobile en translation axiale à l'encontre de la force d'un ressort de compression (29).

16. Extrudeuse selon la revendication 15, **caractérisée en ce que** le ressort de compression (29) est formé d'au moins une rondelle Belleville appuyée contre un épaulement côté sortie (30) du corps (1).
